# EUROPÄISCHE PATENTSCHRIFT

(11) **EP 0 622 153 B1**
(45) Veröffentlichungstag und Bekanntmachung des Hinweises auf die Patenterteilung: **19.11.1997**
(21) Anmeldenummer: 94810243.9
(22) Anmeldetag: 29.04.1994
(51) Int. Cl.: B23Q 1/00, B23Q 17/00

(54) **Rundschalttisch mit Steuereinrichtung**
Rotary indexing table with controlling device
Table à transfert circulaire muni d'un dispositif de commande

(30) Priorität: 30.04.1993 CH 1321/93
(43) Veröffentlichungstag der Anmeldung: 02.11.1994
(73) Patentinhaber: Water-Line S.A., CH-6805 Mezzovico (CH)
(72) Erfinder: Colla, Tiziano, CH-6900 Lugano (CH)
(74) Vertreter: Münch, Otto

(56) Entgegenhaltungen:
- DE-A- 3 018 910
- FR-A- 2 284 397
- US-A- 2 122 356
- PATENT ABSTRACTS OF JAPAN vol. 9, no. 22 (M-354) (1745) 30. Januar 1985 & JP-A-59 167 379 (NISSAN) 20. September 1984

## Beschreibung

Rundschalttische werden für vielerlei Zwecke verwendet, z.B. zur Bearbeitung von Werkstücken, zum Auffüllen und Verschliessen von Behältern, zum Verpacken von Gegenständen und dergleichen. Rundschalttische haben ein Gestell, auf dem ein Tisch um eine Hochachse drehbar gelagert ist. Der Tisch hat mehrere gleichmässig über den Umfang verteilte Aufnahme-Elemente zum Halten der zu behandelnden oder zu bearbeitenden Gegenstände. Durch schrittweises Drehen des Tisches werden die Aufnahme-Elemente an mehreren Stationen des Gestells vorbeigeführt, z.B. einer Beschickungsstation, einer Entladestation und bei Abfüllmaschinen einer Füllstation. Jedes Aufnahme-Element hat gewöhnlich mindestens ein bewegliches Bedienungsglied, z.B. zum Einspannen und Lösen der Gegenstände. Bei bekannten derartigen Rundschalttischen werden die Bedienungsglieder mittels zentralen Kurvenscheiben über Hebelgestänge betätigt. Diese Art der Steuerung ist zwar betriebssicher aber aufwendig in der Herstellung und sehr unflexibel.

Aus der US-A-2 122 356 ist ein Rundschalttisch gemäss Oberbegriff des Anspruchs 1 bekannt. Er hat mehrere Spindeln mit Spannfuttern, welche einzeln über je ein Ventil und einen Hydraulikzylinder betätigt werden. Die Ventile sind an eine Zufuhrleitung angeschlossen, welche über ein Lagerelement auf den Tisch geführt ist. Die Ventile werden beim Drehen des Tisches durch gestellfeste Rollen betätigt, derart, dass zum Beispiel bei der Einfahrt in eine Beladestation das Spannfutter geöffnet, beim Weiterdrehen des Tisches in die nächste Station wieder gespannt wird. Bei dieser Betätigungsart kann deshalb nur bei bewegtem Tisch geschaltet werden. Während des Stillstandes ist ein automatisches Schalten nicht möglich. Unterschiedliche Bewegungsabläufe können nicht eingestellt werden.

Der vorliegenden Erfindung liegt die Aufgabe zugrunde, eine Steuereinrichtung für einen Rundschalttisch anzugeben, die eine hohe Flexibilität bei geringem Herstellungsaufwand ermöglicht. Diese Aufgabe wird durch die Merkmalskombination des Anspruchs 1 gelöst. Bevorzugte Weiterbildungen sind in den abhängigen Ansprüchen angegeben.

Nachfolgend wird ein Ausführungsbeispiel der Erfindung anhand der Zeichnungen erläutert. Darin zeigt:
- Figur 1: Eine schematische Draufsicht auf einen Rundschalttisch, und
- Figur 2: einen schematischen Schnitt durch den Tisch.

In den Figuren ist der Rundschalttisch 1 stark vereinfacht und nur sehr schematisch dargestellt, denn Rundschalttische sind als solche bekannt.

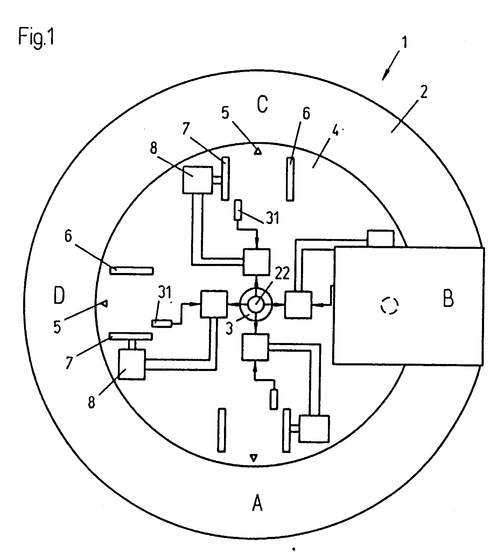

Ein drehfestes Gestell 2 trägt einen vertikalen Lagerzapfen 3, auf dem ein Tisch 4 drehbar gelagert ist. Der Tisch 4 hat mehrere Aufnahme-Elemente 5 für die Aufnahme von Gegenständen. In Figur 1 sind als einfaches Beispiel solcher Aufnahme-Elemente eine Halteleiste 6 und eine Klemmbacke 7 zum Einspannen der Gegenstände gezeigt. Die Klemmbacken 7 werden durch Pneumatikzylinder 8 betätigt. Im Betrieb dreht der Tisch in Schritten von 90°, sodass die Aufnahme-Elemente an mehreren ortsfesten Stationen A, B, C, D vorbeigeführt werden, wo jeweils eine Behandlungs-oder Bearbeitungsoperation erfolgt. Die dazu erforderlichen Bewegungsabläufe werden von einer Steuereinrichtung 20 gesteuert.

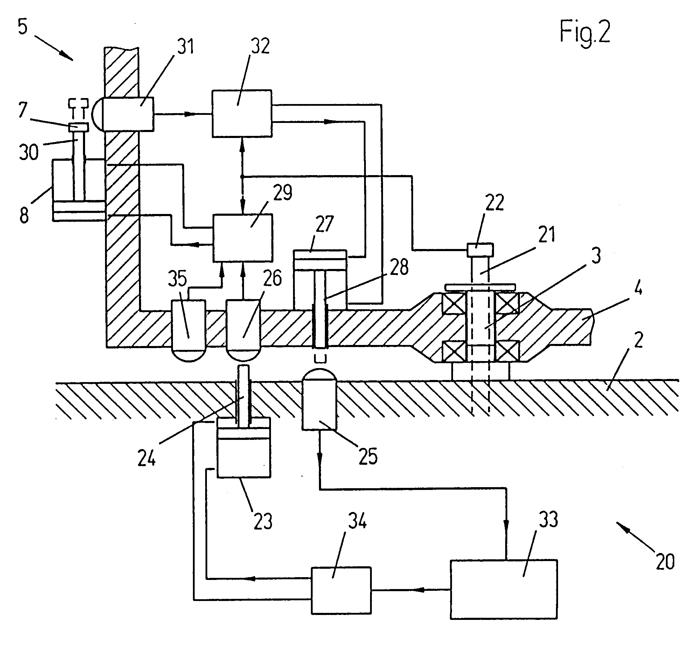

Diese Einrichtung 20 ist in Figur 2 schematisch für einen einfachen Fall dargestellt, in welchem jedem Aufnahme-Element bloss ein einziges Bedienungsglied, z.B. eine Klemmbacke 7 mit zugehörigem Betätigungszylinder 8, zugeordnet ist. Die Klemmbacke 7 wird z.B. in einer Beschickungsstation geklemmt und in einer Entladestation gelöst.

Die Einrichtung 20 hat in der Nabe 3 eine zentrale, stillstehende Zufuhrleitung 21 mit einem drehbaren Kopf 22 für die Zufuhr von Druckluft auf den Tisch 4. Mindestens einigen der Stationen A-D ist je ein gestellfest montiertes Pneumatik-Zylinderaggregat 23 mit einem Kolben mit vertikal unter dem Tisch 4 angeordneter Kolbenstange 24 sowie ein Fühler 25, vorzugsweise ein induktiver Näherungsfühler, zugeordnet. Auf dem Tisch 4 sind zu jedem Aufnahme-Element 5 ein Fühler 26 und ein Pneumatik-Zylinderaggregat 27 mit vertikal nach unten gerichteter Kolbenstange 28 derart montiert, dass beim Stillstand des Tisches 4 jeweils die Kolbenstange 24 mit einem der Fühler 26 und der Fühler 25 mit einer der Kolbenstangen 28 fluchtet. Der Fühler 26 steuert ein Schaltventil 29, das den Speisedruck vom Kopf 22 her bezieht und seinerseits den zugehörigen Zylinder 8 steuert. Die Stellung der Kolbenstange 30 des Zylinders 8 (bzw. der Klemmbacke 7) wird wiederum von einem Näherungsfühler 31 erfasst, der ein Ventil 32 steuert, welches das Aggregat 27 betätigt. Die Stellung der Kolbenstange 28 wird vom Fühler 25 erfasst. Dessen Signal wird einem Steuergerät 33 als Rückmeldung für die erfolgte, befohlene Bewegung der Kolbenstange 30 zugeführt. Das Steuergerät 33 steuert seinerseits die verschiedenen gestellfesten Zylinderaggregate 23 über je ein Schaltventil 34 nach einem Programm im Takt mit der Tischbewegung. Unterbleibt die Rückmeldung durch den Fühler 25, so wird der Tisch 4 angehalten bis die Störung behoben ist.

Die Fühler 25, 26, 31 sind vorzugsweise induktive Nährungsfühler. Das Ventil 29 kann ein bistabiles Schaltventil sein, wobei in diesem Fall ein zweiter Fühler 35 versetzt zum Fühler 26 montiert ist. Der eine Fühler 26 schaltet dann das Ventil 29 in der einen Station A-D ein, während es bei einer andern Station mittels des Fühlers 35 über ein weiteres Zylinderaggregat 23 ausgeschaltet wird.

Die beschriebene Steuereinrichtung ist preiswert in der Herstellung. Sie ermöglicht durch die pneumatische Betätigung sehr rasche und kräftige Bewegungen von Arbeitselementen auf dem Tisch 4. Die Ventile 29, 32, die Zylinderaggregate 27 und die Fühler 26 können raumsparend unter dem Tisch 4 angeordnet werden, sodass dessen Oberseite sehr übersichtlich und leicht zu reinigen ist. Um andere Bewegungsabläufe einstellen zu können, ist häufig lediglich eine Aenderung der Programmierung der Steuereinheit 33 erforderlich, sodass die Einrichtung 20 sehr flexibel ist und rasch an andere Betriebsbedingungen angepasst werden kann. Dadurch ist der Rundschalttisch 1 vielseitig einsetzbar. Durch die Bewegungsrückmeldung ist die Einrichtung 20 sehr betriebssicher.

## Patentansprüche

1. Rundschalttisch mit einem Gestell (2), das ein Lagerelement (3) aufweist, auf welchem ein Tisch (4) drehbar gelagert ist, wobei der Tisch (4) über den Umfang verteilt mehrere Aufnahme-Elemente (5) für zu bearbeitende oder zu bedienende Gegenstände aufweist, wobei im Betrieb der Tisch (4) schrittweise gedreht wird, so dass die Aufnahme-Elemente (5) an einer Reihe von gestellfesten Stationen (A-D) vorbeigeführt werden, wobei jedem Aufnahme-Element (5) mindestens ein am Tisch (4) montiertes, bewegliches Bedienungsglied (7) zugeordnet ist, wobei durch das Lagerelement (3) eine Leitung (21) für die Zufuhr eines Druckmediums auf den Tisch (4) geführt ist, und wobei jedes Bedienungsglied (7) mit einem Arbeitsorgan (30) eines druckmediumbetriebenen Stellorgans (8) verbunden ist, welches durch ein an die Zufuhrleitung (21) angeschlossenes Ventil (29) gesteuert ist, dadurch gekennzeichnet, dass zu mindestens einer Station (A-D) am Gestell (2) ein erstes Huborgan (23) mit einem beweglichen ersten Hubelement (24) montiert ist, und dass jedem Aufnahme-Element (5) mindestens ein erster Fühler (26) zum Erfassen der Stellung des ersten Hubelements (24) in der betreffenden Drehstellung des Tisches (4) zugeordnet ist, der das betreffende Ventil (29) steuert.

2. Rundschalttisch nach Anspruch 1, wobei an jedem Aufnahme-Element (5) ein zweiter Fühler (31) montiert ist, der über je ein zweites Ventil (32) ein dem betreffenden Aufnahme-Element (5) zugeordnetes, am Tisch (4) montiertes zweites Huborgan (27) mit einem beweglichen zweiten Hubelement (28) betätigt, und wobei am Gestell (2) mindestens ein dritter Fühler (25) zum Erfassen der Stellung des zweiten Hubelementes (28) montiert ist.

3. Rundschalttisch nach Anspruch 2, wobei der dritte Fühler (25) mit einer Steuereinheit (33) verbunden ist, welche über ein Schaltelement (34) das erste Huborgan (23) steuert.

4. Rundschalttisch nach einem der Ansprüche 1-3, wobei die ersten, zweiten und dritten Fühler (26, 31, 25) Näherungsschalter sind, vorzugsweise induktive Näherungsschalter.

5. Rundschalttisch nach einem der Ansprüche 1-4, wobei die ersten und zweiten Huborgane (23, 27) als Zylinderaggregate ausgebildet sind, deren Kolbenstangen die ersten und zweiten Hubelemente (24, 28) bilden.

## Claims

1. Indexing turntable, with a frame (2) having a bearing element (3) on which a table (4) is rotatably mounted, the table (4) having about its periphery several receiving elements (5) for articles that are to be processed or operated, the table (4) being turned when in operation step by step so that the receiving elements (5) are taken past a series of stations (A-D) fixed to the frame, each receiving element (5) being provided with at least one movable operating member (7) mounted on the table, a conduit (21) being routed through the bearing element (3) for the supply of a pressure medium to the table (4), and each operating member (7) being connected to a operating element (30) of an actuator (8) driven by a pressure medium, which is controlled by a valve (29) connected to the supply conduit (21), characterized in that at least one station (A-D) on the frame (2) a first lifting device (23) with a movable first lifting element (24) is mounted, and that each receiving element (5) is provided with at least one first sensor (26) for establishing the position of the first lifting element (24) at the respective rotational position of the table (4), which controls the respective valve (29).

2. Turntable according to claim 1, in which a second sensor (31) is fitted to each receiving element (5) which operates via a second valve (32) in each case a second lifting device (27) with a movable second lifting element (28) assigned to the respective receiving element (5) and mounted on the table (4), and in which at least one third sensor (25) for establishing the position of the second lifting element (28) is mounted on the frame (2).

3. Turntable according to claim 2, in which the third sensor (25) is connected to a control unit (33) which controls the first lifting device (23) via a switch element (34).

4. Turntable according to any one of claims 1 to 3, in which the first, second and third sensors (26, 31, 25) are proximity switches, preferably inductive proximity switches.

5. Turntable according to any one of claims 1 to 4, in which the first and second lifting devices (23, 27) are constructed as cylinder assemblies whose piston rods form the first and second lifting elements (24, 28).

## Revendications

1. Table à transfert circulaire munie d'un châssis (2) comportant un élément de palier (3), sur lequel est logée une table (4) de façon rotative, la table (4) présentant, répartis sur sa périphérie, plusieurs éléments de réception (5) destinés à des objets à usiner ou à traiter ; dans le fonctionnement, la table (4) est mise en rotation au pas-à-pas, de sorte que les éléments de réception (5) sont amenés devant une série de postes (A-D) fixés sur le châssis, à chaque élément de réception (5) est affecté au moins un élément d'actionnement mobile (7) monté sur la table (4), une conduite (21) traversant l'élément de palier (3) pour l'amenée d'un agent de pression sur la table (4), et chaque élément d'actionnement (7) étant raccordé à un organe d'ajustement (8) entraîné par un agent de pression, commandé par une vanne (29) raccordée à la conduite d'amenée (21), caractérisée en ce que pour au moins un poste (A-D) est disposé sur le châssis (2) un premier organe de levage (23) avec un premier élément de levage mobile (24) et en ce qu'à chaque élément de réception (5) est affecté au moins un premier capteur (26) pour la détection de la position du premier élément de levage (24) dans la position de rotation concernée de la table (4), commandant la vanne (29) concernée.

2. Table à transfert circulaire selon la revendication 1, dans laquelle pour chaque élément de réception est monté un deuxième capteur (31) qui actionne par l'intermédiaire d'une deuxième vanne (32), un deuxième organe de levage (27) avec un deuxième élément de levage mobile (28) affecté à l'élément de réception correspondant (5) et monté sur la table (4), et sur le châssis (2) est monté au moins un troisième capteur (25) pour la détection de la position du deuxième élément de levage (28).

3. Table à transfert circulaire selon la revendication 2, dans laquelle le troisième capteur (25) est raccordé à une unité de commande (33) qui, par l'intermédiaire d'un élément de connexion (34), commande le premier organe de levage (23).

4. Table à transfert circulaire selon l'une des revendications 1-3, dans laquelle les premier, deuxième et troisième capteurs (26, 31, 25) sont des contacts de proximité, de préférence des contacts de proximité par induction.

5. Table à transfert circulaire selon l'une des revendications 1-4, dans laquelle les premier et second organes de levage (23, 27) sont conçus sous la forme d'ensembles de vérins dont les tiges de piston forment les premier et second éléments de levage (24, 28).
